# EUROPÄISCHE PATENTANMELDUNG

(11) **EP 1 298 963 A1**
(43) Veröffentlichungstag der Anmeldung: **02.04.2003**
(21) Anmeldenummer: 02102331.2
(22) Anmeldetag: 09.09.2002
(51) Int. Cl.: H05B 37/00

(54) **Sende- und Empfangs-LED**

(30) Priorität: 26.09.2001 DE 10147504
(71) Anmelder: SIEMENS AKTIENGESELLSCHAFT, 80333 München (DE)
(72) Erfinder: Hermsen, Markus, 82110, Germering (DE)

(57) **Zusammenfassung**

Beschrieben wird ein Verfahren zur Steuerung einer Beleuchtungseinrichtung in Abhängigkeit von der Umgebungslichtstärke. Dabei wird die Umgebungslichtstärke mittels zumindest eines zur Beleuchtung dienenden lichtemittierenden Elements der Beleuchtungseinrichtung gemessen. Darüber hinaus wird eine entsprechende Schaltungsanordnung zur Steuerung einer Beleuchtungseinrichtung in Abhängigkeit von der Umgebungslichtstärke beschrieben.

## Beschreibung

Die Erfindung betrifft ein Verfahren und eine Schaltungsanordnung zur Steuerung einer Beleuchtungseinrichtung in Abhängigkeit von einer Umgebungslichtstärke. Darüber hinaus betrifft die Erfindung ein Beleuchtungssystem mit einer Beleuchtungseinrichtung und mit einer entsprechenden Schaltungsanordnung, eine Benutzerschnittstelle mit einem solchen Beleuchtungssystem sowie ein Gerät mit einer derartigen Benutzerschnittstelle.

Viele heutzutage verwendete elektronische Geräte, beispielsweise nahezu alle Kommunikationsendgeräte wie Mobilfunkgeräte oder Pager, aber auch Organizer, PDAs oder sonstige Terminals weisen eine beleuchtete Benutzerschnittstelle auf, welche in der Regel aus einer mit einer geeigneten Beleuchtungseinrichtung ausgestatteten Tastatur und/oder einem Display besteht. Bei selbstleuchtenden Typen von Displays, beispielsweise LED (Leuchtdioden), OLED (Organic Light Emitting Diode) oder CRT (Cathode Ray Tube)-Displays, besteht die Beleuchtungseinrichtung im Allgemeinen darin, dass die Anzeigeelemente bzw. die Anzeigefläche selbst aktiv Licht emittieren (selbstleuchtende Displays). LCD-Displays (Flüssigkeitskristalldisplays) sind in vielen Fällen, wie beispielsweise reflektive LCDs, mit einer zusätzlichen Beleuchtungsquelle ausgestattet, um auch in dunkler Umgebung benutzt werden zu können, oder sie verwenden eine Beleuchtungseinrichtung, um die eigentlichen Anzeigeelemente überhaupt ablesbar zu machen (transmissive LCDs). Als zusätzliche Beleuchtungseinrichtung werden üblicherweise ein oder mehrere lichtemittierende Elemente, beispielsweise LEDs, in geeigneter Lage am Displayrand positioniert. Ein flächiger Lichtleiter sorgt für eine Verteilung des Lichts über die Displayfläche. Auf ähnliche Weise werden in der Regel Tastaturen mit passend positionierten LEDs und gegebenenfalls mit Hilfe geeigneter Lichtleiteranordnungen beleuchtet.

Für Displays des selbstleuchtenden Typs ist eine aktive Helligkeitskontrolle notwendig. Ansonsten müssten diese Displays immer unter der vollen Helligkeitsstufe betrieben werden, um auch in einer sehr hellen Umgebung lesbar zu bleiben. In einer relativ dunklen Umgebung würde dann aber das Display viel zu hell erscheinen, um angenehm abgelesen werden zu können. Eine umgebungslichtabhängige Steuerung ist auch bei solchen Displays notwendig, die in hellem Umgebungslicht auf reflektive Weise arbeiten und die in dunkler Umgebung mittels eines sogenannten "Backlights" von hinten beleuchtet werden. Bei derartigen Displays findet bei der Beleuchtung durch die transmissive Wirkung der LCD-Zellen eine Kontrastinversion des Bildes statt, das heißt, dunkle Punkte werden zu hellen Punkten und helle Punkte zu dunklen Punkten. Wenn das Umgebungslicht und das Backlight gleich stark sind, führt dies dazu, dass sich die Effekte gerade aufheben und auf dem Display überhaupt nichts zu sehen ist. Bei diesen Displays muss daher bei Benutzung des Backlights die Lichtstärke des Backlights immer größer sein als die Umgebungslichtstärke. Aber auch für andere Displays des reflektiven, transmissiven oder transreflektiven Typs, für Tastaturen oder für sonstige beleuchtete Bestandteile einer Benutzerschnittstelle bestehen Vorteile in einer aktiven, umgebungslichtabhängigen Beleuchtungssteuerung, da auf diese Weise die Beleuchtung auf das notwendige Maß beschränkt und damit erheblich Energie eingespart werden kann. Die Einsparung von Energie ist bei Verwendung der Benutzerschnittstelle in einem Gerät, welches mittels Akkus betrieben wird, unmittelbar mit einer Verlängerung der Stand-by-Zeiten des jeweiligen Geräts verbunden. Daher ist eine umgebungslichtabhängige Beleuchtungssteuerung insbesondere in mobilen Geräten vorteilhaft. Darüber hinaus ist eine solche Steuerung wegen der Energieeinsparung aber auch in vielen anderen Fällen, beispielsweise in größeren Beleuchtungsanlagen, Leuchthinweisen oder in Armaturentafeln von KFZ etc. sinnvoll.

Zur umgebungslichtabhängigen Beleuchtungssteuerung ist es zwangsläufig notwendig, die Umgebungslichtstärke zu ermitteln. In bereits aus der Praxis bekannten Mobilfunkgeräten wird hierzu ein diskreter Fotosensor genutzt, der irgendwo innerhalb des Gehäuses des Gerätes angeordnet ist. Durch eine kleine Öffnung im Gehäuse gelangt das Umgebungslicht auf den Fotosensor. Dies hat zum einen den Nachteil, dass nicht die unmittelbar am Display anliegende Lichtstärke gemessen wird. Zum anderen ist die Öffnung in dem Gehäuse relativ klein, um das Gehäusedesign nicht zu beeinflussen. Damit ist eine hohe Schmutzempfindlichkeit der gesamten Einrichtung verbunden, da schon geringe Verunreinigungen die Öffnung abdecken und somit die Funktion der Beleuchtungssteuerung beeinflussen können. Für den Benutzer macht sich eine solche Störung des Fotosensors in der Regel durch eine schlechtere Ablesbarkeit des Displays und/oder durch kürzere Stand-by-Zeiten des Geräts bemerkbar, ohne dass er die eigentliche Ursache erkennt. Des Weiteren benötigen das lichtsensitives Element sowie die zugehörigen Bauelemente wie Kontakte, Leitungen etc., die zur Betreibung des lichtsensitiven Elements notwendig sind, zusätzlichen Platz, der gerade in mobilen Kleingeräten - in denen eine umgebungslichtabhängige Beleuchtungssteuerung besonders wünschenswert oder notwendig ist - äußerst knapp ist. Abgesehen davon ist der Einbau eines separaten lichtsensitiven Elements sowie der zugehörigen Bauteile mit zusätzlichen Kosten bei der Herstellung der Geräte verbunden.

Es ist Aufgabe der vorliegenden Erfindung, eine kostengünstige und einfache Alternative zu diesem Stand der Technik zu schaffen.

Diese Aufgabe wird durch ein Verfahren gemäss Patentanspruch 1 und eine Schaltungsanordnung gemäss Patentanspruch 11 gelöst. Die abhängigen Ansprüche enthalten jeweils besonders vorteilhafte Weiterbildungen und Ausgestaltungen der Erfindung.

Erfindungsgemäß wird dabei die Umgebungslichtstärke mittels zumindest eines lichtemittierenden Elements gemessen, welches in der Beleuchtungseinrichtung selbst zur Beleuchtung dient. Die Erfindung nutzt dabei die Tatsache, dass bestimmte lichtemittierende Elemente in zwei Richtungen funktionieren, d. h. wenn eine Spannung an das Element angelegt wird, strahlt dieses Element Licht aus, und wenn von außen Licht auf das jeweilige Element trifft, so wird in dem Element eine Spannung generiert.

Dies ist beispielsweise bei den sogenannten Leuchtdioden bzw. LEDs (Light Emitting Diodes) - wie sie üblicherweise in Beleuchtungseinrichtungen für Benutzerschnittstellen verwendet werden - der Fall. Wird an eine LED eine Spannung angelegt, so fließt ein Strom durch die LED und die LED erzeugt Licht. Wenn dagegen Licht auf eine LED fällt, so wird innerhalb der LED eine Spannung bzw. ein Strom generiert, welcher proportional zur Intensität des einfallenden Lichts, d. h. zur Lichtstärke, ist. Die LED wirkt somit als lichtsensitives Element. Durch geeignete Beschaltung kann das in der LED erzeugte Spannungssignal ausgelesen und somit die Lichtstärke des einfallenden Lichts gemessen werden.

Dieses Prinzip kann auch bei Verwendung anderer lichtemittierender Elemente, welche in zwei Richtungen betrieben werden können, genutzt werden. So kann die Erfindung beispielsweise auch dann angewendet werden, wenn in einem OLED-Display bei einer Beleuchtung mit Umgebungslicht eine ausreichende Spannung generiert wird.

Die Erfindung hat den großen Vorteil, dass kein zusätzliches lichtsensitives Element benötigt wird.

Ein weiterer Vorteil besteht darin, dass das Umgebungslicht genau an den Positionen gemessen wird, an denen die Beleuchtung notwendig ist. So sind beispielsweise bei einem üblichen Displaymodul, welches eine Hintergrundbeleuchtung mit LEDs aufweist, die LEDs perfekt mit einem Lichtleiter verbunden, welcher das Licht über die Displayoberfläche gleichmäßig verteilt. Da ein solcher Lichtleiter ebenfalls in beide Richtungen arbeitet, kann er ebenso das einfallende Umgebungslicht sammeln und somit das gesamte auf das Display einfallende Umgebungslicht integrieren und zu den als lichtsensitiven Elementen arbeitenden LEDs leiten. Das gleiche trifft selbstverständlich auch auf Lichtleiter zu, die zur Verteilung des Lichts innerhalb einer Tastatur, beispielsweise zur Beleuchtung der Tastenumrandung, verwendet werden.

Hierdurch werden zwei Hauptnachteile des bisherigen Stands der Technik vermieden. Zum einen wird die Gefahr, dass das lichtsensitive Element durch eine Verschmutzung abgeschattet oder vollständig abgedeckt wird, drastisch reduziert. Zum anderen fallen durch die erfindungsgemäße Messung der Umgebungslichtstärke keine höheren zusätzlichen Herstellungskosten an.

Um die Erfindung zu realisieren, wird lediglich eine Schaltungsanordnung zur Steuerung der Beleuchtungseinrichtung benötigt, welche eine geeignete Messschaltung aufweist, um mittels des lichtimitierenden Elements der Beleuchtungseinrichtung die Umgebungslichtstärke zu messen. Das heißt die Messschaltung muss in der Lage sein, die bei einem Lichteinfall in dem Element erzeugte Spannung bzw. den Strom als Signal auszulesen und ggf. zu verstärken und/oder selbst auszuwerten.

Es können auch mehrere lichtemittierende Elemente der Beleuchtungseinrichtung zur Messung herangezogen werden, sofern die Beleuchtungseinrichtung mehrere lichtemittierende Elemente enthält. Insbesondere ist es auch möglich, nur ein Teil der lichtemittierende Elemente der Beleuchtungseinrichtung für die Messung zu nutzen. Beispielsweise könnten bei einer Beleuchtungseinrichtung, die mit einer bestimmten Anzahl von Leuchtdioden ein Display beleuchtet und weitere Leuchtdioden zur Beleuchtung einer Tastatur verwendet, lediglich die LEDs für die Hintergrundbeleuchtung des Displays zur Messung der Umgebungslichtstärke verwendet werden.

Bei einem bevorzugten Ausführungsbeispiel ist die Schaltungsordnung so ausgestaltet bzw. angeordnet, dass mehrere parallel und/oder in Serie geschaltete lichtemittierende Elemente der Beleuchtungseinrichtung mit der Messschaltung verbunden sind. Wenn beispielsweise eine Reihenschaltung von LEDs zur Beleuchtung genutzt wird, so kann folglich auch die komplette Reihe von LEDs zur Umgebungslichtmessung herangezogen werden. Dies ist insofern vorteilhaft, da bei einem Lichteinfall die effektiv in der Leuchtdiodenreihe - welche ja einer Reihenschaltung von lichtsensitiven Elementen entspricht - induzierte Spannung größer ist als bei einem einzelnen lichtsensitiven Element. Ebenso wird bei einer Parallelschaltung von Leuchtdioden die bei einem Lichteinfall von der Messschaltung detektierbare Ladungsänderung und somit der resultierende Strom erhöht, wodurch eine präzise Messung einfacher wird.

Soweit im Folgenden nur von einem einzelnen lichtemittierenden Element die Rede ist, kann hierbei in der Regel davon ausgegangen werden, dass es sich auch um eine Gruppe von lichtemittierenden Elementen oder sogar um die komplette Beleuchtungseinrichtung handeln kann.

Eine solche Schaltungsanordnung zur Beleuchtungssteuerung kann als eine zusammenhängende Baugruppe, d. h. beispielsweise als fertig konfektioniertes Modul, aufgebaut sein. Für die Erfindung ist dies aber nicht unbedingt notwendig. So können verschiedene Funktionselemente bzw. Funktionsgruppen auch voneinander getrennt in verschiedenen Bereichen eines Geräts angeordnet sein. Insbesondere können auch einige Bauteile der Schaltungsanordnung von anderen Funktionseinheiten des Geräts mitbenutzt werden bzw. können umgekehrt auch Teile dieser Funktionseinheiten für die erfindungsgemäße Schaltungsanordnung mitbenutzt werden.

Bei einem besonders bevorzugten Ausführungsbeispiel ist die Schaltungsanordnung innerhalb eines integrierten Schaltkreises einer Spannungsversorgungssteuerung der Beleuchtungseinrichtung, d. h. beispielsweise innerhalb eines ASIC (Application Specific Integrated Circuit), integriert. D. h. zur Realisierung einer entsprechenden Schaltungsanordnung ist es nur notwendig, die bisher schon zur Spannungsversorgung von Beleuchtungseinrichtungen verwendeten ASICs zu modifizieren. Durch die Erfindung wird daher kein zusätzlicher Platz im Gerät benötigt. Bei einer Massenfertigung der ASICs fallen in aller Regel noch nicht einmal höhere Kosten an, da die erfindungsgemäße Modifizierung des ASICs nur einen Einbau von einigen Gattern mehr erfordert als bisher. Ebenso ist eine erhöhte Pinzahl am Gehäuse des ASICs nicht unbedingt vonnöten.

Bei einem besonders bevorzugten Ausführungsbeispiel wird das lichtemittierende Element zur Aussendung des Lichts pulsierend betrieben. In den Pulspausen, d. h. dann, wenn kein Licht erzeugt wird, wird mittels des lichtemittierenden Elements die Lichtstärke ermittelt.

Dieses Verfahren bietet sich insbesondere deswegen an, da ohnehin viele Beleuchtungseinrichtungen, welche mit LEDs arbeiten - insbesondere nahezu alle Hintergrundbeleuchtungssysteme für handelsübliche Benutzerschnittstellen - mit dem sog. Pulsweitenmodulationsverfahren arbeiten, um die LEDs zu betreiben und damit die Helligkeit der Beleuchtungseinrichtung steuern zu können. Es ist folglich lediglich erforderlich, die Messungen invers synchronisiert zur Anlegung der Spannung an die lichtemittierenden Elemente durchzuführen. Das heißt, es wird genau in den Zeiten, an denen keine Spannung an die LEDs angelegt wird, die in den LEDs selbst durch das einfallende Umgebungslicht generierte Spannung gemessen. Um diese Messungen durchzuführen, werden folglich noch nicht einmal zusätzliche Kabel oder sonstige Verbindungsleitungen zu den lichtsensitiven Elementen benötigt.

Bei einem bevorzugten Ausführungsbeispiel der Schaltungsanordnung weist diese dementsprechend eine Umschaltvorrichtung auf, welche das lichtemittierende Element, welches zur Messung des Umgebungslichts herangezogen wird, bzw. eine Gruppe von solchen Elementen oder sogar die gesamte Beleuchtungseinrichtung wechselweise entweder mit einer Spannungsquelle oder mit der Messschaltung zur Ermittlung der Umgebungslichtstärke verbindet. Die Verbindung kann dabei direkt oder indirekt, z. B. über einen Vorwiderstand, erfolgen.

Diese Umschaltvorrichtung kann von einer Pulsweitenmodulations-Steuereinheit angesteuert werden. Vorzugsweise handelt es sich hierbei um die Pulsweitenmodulations-Steuereinheit, die auch ohne den erfindungsgemäßen Aufbau verwendet würde, um die Beleuchtungseinrichtung bzw. die lichtemittierenden Elemente der Beleuchtungseinrichtung gemäß einem gewünschten Puls-Pausen-Verhältnis mit der Spannungsquelle zu verbinden. Es ist dann nur die Ersetzung eines einfachen Ein/Aus-Schaltelements durch die Umschaltvorrichtung erforderlich.

Bei der Umschaltvorrichtung kann es sich um ein einzelnes Umschaltelement oder beispielsweise auch um zwei Ein/Aus-Schaltelemente handeln, welche jeweils die Verbindungen von dem lichtemittierenden Element zur Spannungsquelle und zur Messschaltung unterbrechen. In letzterem Fall ist dafür zu sorgen, dass die Schalteingänge der beiden Schaltelemente antiparallel miteinander verbunden werden, d. h. dass am Schalteingang des einen Schaltelements mit geringfügiger zeitlicher Verzögerung das inverse Signal anliegt wie am Schalteingang des anderen Schaltelements. Dies ist möglich, indem beispielsweise vor einen der Schalteingänge ein Inverter vorgeschaltet wird und die Schalteingänge abgesehen von dem Inverter gemeinsam mit dem Schaltausgang der Pulsweitenmodulations-Steuereinheit verbunden sind.

Die Messschaltung selbst kann auf die verschiedensten Weisen aufgebaut sein. Bei einem Ausführungsbeispiel weist die Messschaltung einen Analog/Digital-Wandler auf, welcher ein Ausgangssignal eines an die Messschaltung angeschlossenen lichtemittierenden Elements - vorzugsweise nach vorheriger Verstärkung - digitalisiert. Der so erzeugte digitale Messwert repräsentiert dann direkt die gemessene Lichtstärke.

In einem bevorzugten Ausführungsbeispiel wird dieser digitale Messwert direkt wieder der Pulsweitenmodulations-Steuereinheit zugeführt, die den digitalen Messwert bei der Festlegung des Puls-Pausen-Verhältnisses zur Steuerung der Helligkeit der Beleuchtungseinrichtung berücksichtigt.

Zusätzlich oder alternativ kann dieser digitale Messwert aber auch an eine übergeordnete Steuer- bzw. Recheneinheit des Geräts, beispielsweise eine Geräte-CPU, übermittelt werden, welche den digitalen Messwert wiederum bei einer Berechnung der gewünschten Helligkeit der Beleuchtungseinrichtung berücksichtigt und welche die Beleuchtungseinrichtung direkt oder indirekt, beispielsweise über die Pulsweitenmodulations-Steuereinheit, ansteuert. Diese übergeordnete Steuereinheit kann den digitalen Messwert auch für weitere Zwecke verwenden, z. B. für eine Beleuchtungsmessfunktion, die einen gemessenen Lichtstärkewert an den Benutzer ausgibt.

Bei einem alternativen Ausführungsbeispiel werden die Ausgangssignale des jeweiligen lichtemittierenden Elements innerhalb eines mehrere einzelne Messungen, d. h. mehrere Pulspausen, umfassenden Integrationszyklus aufintegriert.

Hierzu weist die Messschaltung eine geeignete Integratorschaltung auf. Das Ausgangssignal der Integratorschaltung entspricht dann dem aufintegrierten Ausgangssignal des lichtemittierenden Elements. Das Ausgangssignal der Integratorschaltung wird hierbei beispielsweise zu Beginn eines Integrationszyklus auf einen Startwert eingestellt, d. h. üblicherweise auf Null zurückgesetzt. Während des Integrationszyklus wird dann der Ausgangswert der Integratorschaltung mit einem vorgegebenen Referenzwert verglichen und die Zeit ermittelt, bis das Ausgangssignal der Integratorschaltung den Referenzwert erreicht. Dies ist beispielsweise mit einem einfachen Zähler möglich, welcher über einen vorgegebenen Takt permanent hochgezählt wird und welcher gemeinsam mit der Integratorschaltung zu Beginn eines neuen Integrationszyklus zurückgesetzt wird. Sobald das Ausgangssignal der Integratorschaltung den Referenzwert erreicht hat, ist ein Integrationszyklus abgeschlossen. Die Zeitdauer eines Integrationszyklus - gegeben durch den Zählerwert vor dem Zurücksetzen des Zählers - ist dann ein Maß für die Umgebungslichtstärke und kann folglich für die Steuerung der Beleuchtungseinrichtung genutzt werden.

Eine solche Integration über mehrere Einzelmessungen hat den Vorteil, dass die gesamte Messschaltung rauschunempfindlicher ist. Im Übrigen kann in einer solchen Messschaltung auf einen A/D-Wandler verzichtet werden und stattdessen ein in einem ASIC kostengünstiger implementierbarer Zähler verwendet werden, um ein digitales Ausgangssignal aus der Messschaltung - hier den Zählerwert - als Maß für die Umgebungslichtstärke auszugeben.

Die Erfindung wird im Folgenden unter Hinweis auf die beigefügten Zeichnungen anhand von Ausführungsbeispielen näher erläutert. Es stellen dar:
Figur 1 ein schematisches Schaltbild einer Beleuchtungseinrichtung mit einer Schaltungsanordnung gemäß einem ersten Ausführungsbeispiel der Erfindung,
Figur 2 ein schematisches Schaltbild einer Beleuchtungseinrichtung mit einer Schaltungsanordnung gemäß einem zweiten Ausführungsbeispiel der Erfindung.

Bei den beiden in den Figuren dargestellten Ausführungsbeispielen handelt es sich jeweils um Schaltungsanordnungen zur Steuerung der Spannungsversorgung von Beleuchtungseinrichtungen 1, wie sie in handelsüblichen Displaymodulen oder sonstigen Beleuchtungseinrichtungen, beispielsweise Tastaturbeleuchtungen, verwendet werden. Derartige Beleuchtungseinrichtungen bestehen üblicherweise aus mehreren zusammengekoppelten LEDs 2.

Im dargestellten Ausführungsbeispiel handelt es sich um parallel geschaltete LEDs 2, welche in üblicher Form einerseits mit einer Masse M und andererseits über übliche Vorwiderstände R2 mit einer Spannungsquelle 8 verbunden sind. Bei der Spannungsquelle 8 handelt es sich beispielsweise um einen Akku des Geräts, in dem sich die Beleuchtungseinrichtung 1 befindet.

Die Steuerung der Helligkeit der Beleuchtungseinrichtung erfolgt hierbei in üblicher Weise durch ein Pulsweitenmodulationsverfahren. Dazu wird über eine Pulsweitenmodulations-Steuereinheit 5 mittels einer Schalteinheit T1, beispielsweise einem FET (Feld-Effekt-Transistor) T1, in einem vorgegebenen Puls-Pausen-Verhältnis die Beleuchtungseinrichtung 1 mit der Spannungsquelle 8 verbunden oder die Verbindung unterbrochen. Über einen Oszillator 15 wird der Pulsweitenmodulations-Steuereinheit 5 ein Takt vorgegeben.

Bei den meisten herkömmlichen Geräten ist sowohl die Pulsweitenmodulations-Steuereinheit 5 als auch der FET T1 innerhalb eines sog. "Powersupply ASIC" realisiert. Es handelt sich hier um einen einzelnen IC, welcher relativ wenig Platz innerhalb des Geräts benötigt. Bei einer Beleuchtungseinrichtung für ein Display befindet sich dieser Powersupply ASIC häufig getrennt von der Beleuchtungseinrichtung des Displaymoduls auf der Hauptbaugruppe.

Bei beiden in den Figuren dargestellten Ausführungsbeispielen ist die Schaltungsanordnung 4, 4' jeweils so gewählt, dass sie einfach durch eine Modifizierung des ASIC innerhalb des ASIC realisiert werden kann und dadurch keinen zusätzlichen Platz innerhalb eines Geräts benötigt.

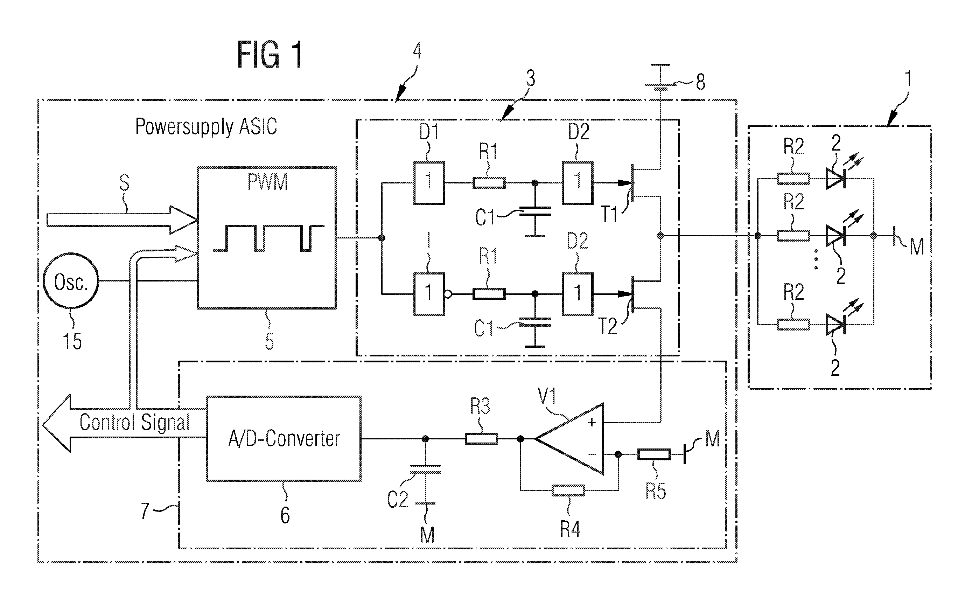

Bei dem Ausführungsbeispiel gemäß Figur 1 weist die Schaltungsanordnung 4 anstelle eines einfachen FET T1 eine Umschaltvorrichtung 3 auf. Diese Umschaltvorrichtung 3 weist neben dem ersten FET T1, welcher wie bisher die Beleuchtungseinrichtung mit der Spannungsversorgung 8 verbindet, einen parallel dazu geschalteten zweiten FET T2 auf, welcher die Beleuchtungseinrichtung 1 mit einer Messschaltung 7 verbindet, welche sich ebenfalls innerhalb des ASIC befindet.

Den Schalteingängen der FET T1, T2 ist jeweils ein einfaches UND-Gatter D2 sowie davor jeweils ein RC-Glied, bestehend aus einem Widerstand R1 und einem gegen Masse M geschalteten Kondensator C1, vorgeschaltet. Vor den Widerstand R1 des RC-Glieds ist in dem Pfad, der auf den Schalteingang des ersten FET T1 führt, welcher die Beleuchtungseinrichtung 1 mit der Spannungsquelle verbindet, ein weiteres UND-Gatter geschaltet. Vor dem Widerstand R1 des RC-Glieds in dem anderen Pfad, der auf den Schalteingang des zweiten FET T2 führt, welcher die Beleuchtungseinrichtung 1 mit der Messschaltung 7 verbindet, befindet sich dagegen ein Inversionsglied I. Die Eingänge des Inversionsglieds I und des parallel dazu im anderen Pfad angeordneten UND-Gatters D1 sind mit dem Ausgang der Pulsweitenmodulations-Steuereinheit 5 verbunden.

Die einzelnen Elemente innerhalb dieser beiden Pfade von der Pulsweitenmodulations-Steuereinheit 5 auf die Schalteingänge der beiden FET T1, T2 haben folgende Funktion:

Das Inversionsglied I sorgt dafür, dass an dem zweiten FET T2 immer genau das inverse Signal anliegt wie am ersten FET T1. Dadurch wird gewähleistet, dass durch die Pulsweitenmodulations-Steuereinheit 5 automatisch dann, wenn die Verbindung zwischen Beleuchtungseinrichtung 1 und Spannungsversorgung 8 eingeschaltet wird, die Verbindung zwischen der Beleuchtungseinrichtung 1 und der Messschaltung 7 ausgeschaltet wird und umgekehrt. Das erste UND-Gatter D1 in dem zum ersten FET T1 führenden Schaltpfad befindet sich dort lediglich aus Symmetriegründen, um eine eventuell in dem Pfad zum zweiten FET T2 durch die Invertierungseinheit I auftretende zu große Verzögerung zu kompensieren. Die RC-Glieder R1, C1 dienen jeweils als Verzögerungsglieder. Die nachfolgenden UND-Gatter dienen als Spannungsfolger. Sie haben eine Komparatorfunktion, um einen möglichst steilen Schaltimpuls für die FET T1, T2 zu erhalten.

In der Umschaltvorrichtung 3 wird so auf einfache Weise dafür gesorgt, dass durch eine übliche Pulsweitenmodulations-Steuereinheit 5 automatisch zwischen der Spannungsquelle 8 und der Messschaltung 7 hin- und hergeschaltet wird.

Die Messschaltung 7 weist eingangsseitig zunächst eine nicht invertierende Verstärkerschaltung auf. Diese ist in üblicher Weise aus einem Operationsverstärker V1, welcher in geeigneter Weise mit verschiedenen Widerständen R3, R4, R5 beschaltet ist, aufgebaut. Im vorliegenden Fall ist der negative Eingang des Operationsverstärkers V1 über einen Widerstand R5 gegen Masse M geschaltet und der Ausgang des Operationsverstärkers V1 über den Widerstand R 4 auf den negativen Eingang zurückgekoppelt. Das Ausgangssignal LS der LEDS 2 liegt am positiven Eingang des Operationsverstärkers 1 an, um die invertierende Verstärkerschaltung zu realisieren. Es ist klar, dass es sich bei dieser Verstärkerschaltung lediglich um ein Ausführungsbeispiel handelt und dass ein Fachmann hier auch eine beliebige andere geeignete Verstärkerschaltung verwenden kann.

Am Ausgang der Verstärkerschaltung befindet sich ein Rauschfilter, der durch einen gegen Masse M geschalteten Kondensator 2 gebildet wird. Durch den Rauschfilter wird das Ausgangssignal der Verstärkerschaltung geglättet, indem schnelle Schwankungen ausgeglichen werden. Auf diese Weise wird beispielsweise die Netzfrequenz, welche evtl. bei einem künstlich erzeugten Umgebungslicht die Messung verfälschen könnte, ausgefiltert.

Das geglättete Ausgangssignal der Verstärkerschaltung wird dann in einem üblichen A/D-Wandler 6 in einen digitalen Messwert umgewandelt. Dieser entspricht einem Maß für die Umgebungslichtstärke und kann beispielsweise an irgendeine Steuereinheit in dem jeweiligen Gerät, in dem sich die Beleuchtungseinrichtung befindet, z.B. an eine CPU eines Mobilfunkgeräts, weitergeleitet werden und dort bei einer Berechnung der Beleuchtungsstärke der Beleuchtungseinrichtung berücksichtigt werden.

Im dargestellten Ausführungsbeispiel wird dieser digitale Messwert zusätzlich direkt auf einen Eingang der Pulsweitenmodulations-Steuereinheit 5 gegeben und dort berücksichtigt. Die Pulsweitenmodulations-Steuereinheit 5 weist außerdem noch einen weiteren Eingang auf, mit dem sie weitere Vorgaben beispielsweise durch die CPU des Geräts erhält. Hierbei kann es sich um ein Signal S handeln, mit welchem die Beleuchtungseinrichtung insgesamt eingeschaltet oder ausgeschaltet wird. So kann z. B. in üblicher Weise ein Einschaltsignal bei einem ersten Tastendruck auf die Tastatur des Geräts und ein Ausschaltsignal nach einem bestimmten Zeitablauf nach der letzten Bedienung der Tastatur an die Pulsweitenmodulations-Steuereinheit 5 gegeben werden.

Es versteht sich von selbst, dass genau wie die Verstärkerschaltung auch die übrigen Komponenten der Schaltungsanordnung variiert werden können, ohne den Rahmen der Erfindung zu verlassen. So ist beispielsweise der Rauschfilter optional bzw. er kann auch in anderer Weise als in dem dargestellten Ausführungsbeispiel verwirklicht werden.

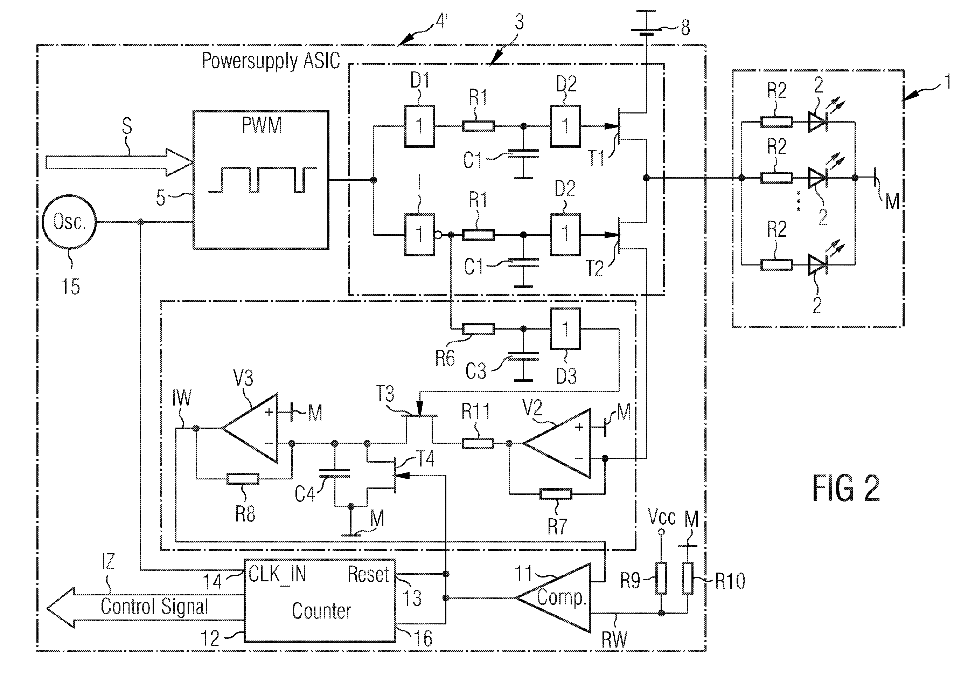

Das Ausführungsbeispiel in Figur 2 unterscheidet sich im Wesentlichen darin, dass die Schaltungsanordnung 4' eine andere Messschaltung 9 aufweist. Auch diese Messschaltung 9 ist komplett innerhalb des Powersupply ASIC untergebracht. Komponenten, die in diesem Ausführungsbeispiel mit dem Ausführungsbeispiel gemäß Figur 1 identisch oder nahezu identisch sind, sind in Figur 2 mit den gleichen Bezugsziffern versehen.

Auch bei diesem Ausführungsbeispiel wird die Beleuchtungseinrichtung 1 über eine Pulsweitenmodulations-Steuereinheit 5 betrieben, welche von einem Oszillator 15 getaktet wird und mittels eines Steuersignals S beispielsweise von einer CPU des Geräts gesteuert, insbesondere ein- und ausgeschaltet wird. Die Umschaltvorrichtung 3, um mit Hilfe der Pulsweitenmodulations-Steuereinheit 5 die LEDs 2 der Beleuchtungseinrichtung 1 wechselweise mit der Spannungsquelle 8 oder mit der Messschaltung 9 zu beschalten, ist dabei genauso aufgebaut wie die Umschaltvorrichtung 3 in Figur 1.

Im Gegensatz zu dem Ausführungsbeispiel gemäß Figur 1 weist die Messschaltung 9 hier jedoch eingangsseitig eine Integratorschaltung 10 auf, welche im Wesentlichen aus einer "Sample-Hold-Stufe" bestehend aus zwei aufeinanderfolgenden Operationsverstärkern V2 und V3 und einem Kondensator C4 besteht.

Das ankommende Ausgangssignal LS der LEDs 2 geht hier zunächst auf den negativen Eingang des ersten Operationsverstärkers V2, dessen positiver Eingang auf Masse M geschaltet ist und dessen Ausgang über den Widerstand R7 auf den negativen Eingang zurückgeschaltet ist. Der Ausgang dieser invertierenden Verstärkerschaltung 1 liegt über einen Widerstand R11 zum einen an einem Kondensator C4 an, welcher auf der anderen Seite gegen Masse M geschaltet ist. Dieser Kondensator C4 wird über die erste invertierende Verstärkerschaltung über mehrere Messungen, d. h. über mehrere Pulspausen der Pulsweitenmodulation, aufgeladen. Die im Ladekondensator C4 gespeicherte Ladung entspricht dem aufintegrierten Ausgangssignal LS der LEDs 2.

Um zu vermeiden, dass beim offenen negativen Eingang des Operationsverstärkers V2, d. h. in den Zeiten, in denen die LEDs 2 mit der Spannungsversorgung 8 verbunden sind und der FET T2 offen ist, wieder entladen wird, befindet sich zwischen dem Ausgang der ersten Verstärkerschaltung und dem Ladekondensator C4 ein weiterer FET T3. Dieser FET T3 unterbricht als Schaltelement in diesen Zeiten die Verbindung zwischen dem Ausgang des Operationsverstärkers V2 und dem Ladekondensator C4.

Der dritte FET T3 wird ebenfalls mittels der Pulsweitenmodulations-Steuereinheit 5 geschaltet, indem hinter dem Invertierglied I in dem Pfad zwischen der Pulsweitenmodulations-Steuereinheit 5 und dem Schalteingang des zweiten FET T2 das Signal aus der Umschaltvorrichtung 3 abgegriffen wird. Dieses Signal wird ebenfalls zur Verzögerung über ein RC-Glied R6, C3 und nachfolgend über ein als Schmitt-Trigger dienendes UND-Gatter D3 geführt, um zum richtigen Zeitpunkt einen steilen Schaltimpuls zu erhalten. Das als Verzögerungsglied wirkende RC-Glied R6, C3 ist so dimensioniert, dass die Zeitkonstante etwas größer ist als bei den RC-Gliedern R1, R2 in den Pfaden zu den beiden FET T1, T2 der Umschaltvorrichtung 3. Dadurch schaltet der FET T3 am Ausgang des ersten Operationsverstärkers V2 der Messschaltung 9 etwas später als der FET T2, welcher den negativen Eingang des Operationsverstärkers V2 mit den LEDs 2 verbindet. Auf diese Weise wird dafür gesorgt, dass das Einschwingverhalten des Operationsverstärkers V2 den Ladekondensator C4 nicht beeinflusst.

Der Ladekondensator C4 ist parallel mit einem weiteren FET T4 überbrückt. Durch Einschalten dieses FET T4 kann der Ladekondensator C4 entladen werden und somit auf einen Nullwert zurückgesetzt werden.

Das im Ladekondensator C4 aufintegrierte Ausgangssignal wird über eine weitere invertierende Verstärkerschaltung, bestehend aus einem zweiten Operationsverstärker V3, dessen positiver Eingang auf Masse M gelegt ist und dessen Ausgang über einen Widerstand R8 auf den negativen Eingang zurückgekoppelt ist, verstärkt. Diese zweite Verstärkerschaltung sorgt für eine Lastentkopplung, damit bei einer weiteren Auswertung des im Ladekondensator C4 aufintegrierten Signals der Ladekondensator C4 nicht entladen wird.

Das am Ausgang des zweiten Operationsverstärkers V3 anliegende Ausgangssignal ist somit das Ausgangssignal IW der Integratorschaltung 10. Es entspricht dem aufintegrierten Ausgangssignal LS der LEDs 2, ausgehend vom letzten Zurücksetzen des Ladekondensators C4.

Dieses Ausgangssignal IW der Integratorschaltung wird einem Komparator 11 zugeführt. An einem anderen Eingang dieses Komparators 11 liegt ein Referenzsignal RW an, mit dem das Ausgangssignal IW der Integratorschaltung 10 verglichen wird.

Der Referenzwert RW ist durch eine anliegende Spannung V_{CC} und einen Spannungsteiler, welcher aus zwei Widerständen R9, R10, von denen einer in üblicher Weise gegen die anliegende Spannung V_{CC} und der andere gegen Masse M geschaltet ist, werksseitig fest vorgegeben. Alternativ ist es auch möglich, hier eine variable Spannung anzulegen, um den Referenzwert RW beliebig einzustellen. Dies kann beispielsweise mittels eines D/A-Wandlers geschehen.

Sobald das Ausgangssignal IW der Integratorschaltung 10 den Referenzwert RW erreicht, liegt am Ausgang des Komparators 11 ein Signal an, welches zum einen auf den Reset-FET T4 der Integratorschaltung 10 gegeben wird, um den Ladekondensator C4 zu entladen und somit die Integratorschaltung 10 zurückzusetzen. Zum anderen wird dieses Reset-Signal auf einen Reset-Eingang 13 eines Zählers 12 gegeben, welcher an seinem Clock-Eingang 14 das Signal des Oszillators 15 erhält, der auch die Pulsweitenmodulations-Steuereinheit 5 ansteuert. Der Zähler 12 zählt in Abhängigkeit von diesem Clock-Signal ständig hoch. Durch ein Signal auf dem Reset-Eingang 13 wird der Zähler 12 auf Null zurückgesetzt. Der Wert am Zählerausgang direkt vor einem Zurücksetzen des Zählers 12, bei dem es sich einfach um eine digitale Zahl handelt, entspricht somit genau der Integrationszeit IZ, welche vergangen ist, bis das Ausgangssignal IW der Integratorschaltung 10, d. h. das aufintegrierte Ausgangssignal LS der LEDs 2, den Referenzwert RW erreicht hat. Diese Integrationszeit IZ ist umso kürzer, je höher die von den LEDs 2 generierte Spannung ist, d. h. die Integrationszeit IZ ist abhängig von dem auf die LEDs 2 einfallenden Licht und kann daher als Maß für die Umgebungslichtstärke verwendet werden.

Um zu vermeiden, dass bei einer sehr schwachen Umgebungslichtstärke der Zähler 12 überläuft, bevor er durch das Reset-Signal des Vergleichers 11 zurückgesetzt wird und dadurch das Messergebnis verfälscht werden kann, ist ein Overflow-Ausgang 16 des Zählers 12 mit dem Reset-Eingang 13 des Zählers 12 und dem Reset-FET T4 der Integratorschaltung 10 verbunden. Bei einem Überlauf des Zählers 12 wird an diesem O-verflow-Ausgang 16 ein Signal ausgegeben und dadurch die Integratorschaltung 10 und der Zähler 12 zurückgesetzt, so dass am Zählerausgang vor einem Zurücksetzen des Zählers 12 der Maximalwert des Zählers 12 ausgelesen wird. Dies entspricht folglich der maximal mit diesem Zähler 12 messbaren Integrationszeit IZ und wird dementsprechend von den dem Zähler 12 nachfolgenden Funktionseinheiten automatisch richtig als Messergebnis bei einer minimalen Umgebungslichtstärke erkannt.

Da es sich bei dem Ausgangssignal des Zählers 12 lediglich um einen Zählerstand handelt, kann dieses digitale Signal anders als bei dem Ausführungsbeispiel gemäß Figur 1 nicht einfach direkt an die Pulsweitenmodulations-Steuereinheit 5 übergeben und dort verarbeitet werden. Zumindest wäre hierzu innerhalb der Pulsweitenmodulations-Steuereinheit 5 ein erhöhter Aufwand erforderlich. Daher ist es in diesem Fall einfacher, das die Integrationszeit IZ repräsentierende Ausgangssignal an eine übergeordnete Recheneinheit, beispielsweise die CPU des Geräts, zu übergeben und dort auszuwerten und bei der Einstellung der Pulsweitenmodulations-Steuereinheit 5 über das Signal S zu berücksichtigen.

Die Messschaltung gemäß Figur 2 ist gegenüber der Messschaltung gemäß Figur 1 jedoch insofern vorteilhaft, da ein Zähler 12 im Verhältnis zu einem A/D-Wandler einfacher und kostengünstiger innerhalb eines ASIC einbaubar ist. Zum anderen sind die Anforderungen an die verwendeten Operationsverstärker geringer, da die Empfindlichkeit der gesamten Schaltung wegen der Integration über mehrere Pulse geringer ist als bei dem Ausführungsbeispiel gemäß Figur 1.

Es wird ausdrücklich darauf hingewiesen, dass es sich auch bei dem Ausführungsbeispiel gemäß Figur 2 lediglich um ein Beispiel für den Aufbau einer entsprechenden Schaltung handelt und dass diese Schaltung von einem Fachmann durchaus auf verschiedenste Weise geeignet modifiziert werden kann. Beispielsweise ist es möglich, am Ausgang des Komparators noch ein weiteres RC-Glied einzusetzen, um das Reset-Signal zur Beschaltung des Reset-FET T4 und des Eingangs des Zählers 12 zu verlängern. Ebenso sind auch weitere Variationen möglich, ohne den Rahmen der Erfindung zu verlassen.

Außerdem wird noch einmal ausdrücklich darauf hingewiesen, dass - obwohl die Erfindung überwiegend an Beispielen der Beleuchtung einer Benutzerschnittstelle beschrieben wurde - die Erfindung nicht auf derartige Beleuchtungseinrichtungen beschränkt ist.

## Patentansprüche

1. Verfahren zur Steuerung einer Beleuchtungseinrichtung (1) in Abhängigkeit von einer Umgebungslichtstärke, **dadurch gekennzeichnet, dass** die Umgebungslichtstärke mittels zumindest eines zur Beleuchtung dienenden lichtemittierenden Elements (2) der Beleuchtungseinrichtung (1) gemessen wird.

2. Verfahren nach Anspruch 1, **dadurch gekennzeichnet, dass** als lichtemittierendes Element (2) eine LED (2) und/oder eine OLED verwendet wird.

3. Verfahren nach Anspruch 1 oder 2, **dadurch gekennzeichnet, dass** das lichtemittierende Element (2) pulsierend betrieben wird und in den Pulspausen mittels des lichtemittierenden Elements (2) die Lichtstärke ermittelt wird.

4. Verfahren nach Anspruch 3, **dadurch gekennzeichnet, dass** das lichtemittierenden Element (2) mittels einer Umschaltvorrichtung (3) wechselweise entweder mit einer Spannungsquelle (8) oder mit einer Messschaltung (7, 9) zur Ermittlung der Umgebungslichtstärke verbunden wird.

5. Verfahren nach Anspruch 4, **dadurch gekennzeichnet, dass** die Umschaltvorrichtung (3) von einer Pulsweitenmodulations-Steuereinheit (5) angesteuert wird.

6. Verfahren nach einem der Ansprüche 1 bis 5, **dadurch gekennzeichnet, dass** ein Ausgangssignal (LS) des lichtemittierenden Elements (2) in einen digitalen Messwert umgewandelt wird.

7. Verfahren nach Anspruch 6, **dadurch gekennzeichnet, dass** der digitale Messwert einer Pulsweitenmodulations-Steuereinheit (5) für die Beleuchtungseinrichtung (1) zugeführt wird.

8. Verfahren nach Anspruch 6 oder 7, **dadurch gekennzeichnet, dass** der digitale Messwert einer zentralen Steuereinheit zugeführt wird, welche die Beleuchtungseinrichtung (1) ansteuert.

9. Verfahren nach einem der Ansprüche 1 bis 8, **dadurch gekennzeichnet, dass** die Ausgangssignale (LS) des lichtemittierenden Elements (2) innerhalb eines Integrationszyklus, welcher mehrere einzelne Messungen umfasst, in einer Integratorschaltung (10) aufintegriert werden.

10. Verfahren nach Anspruch 9, **dadurch gekennzeichnet, dass** zu Beginn eines Integrationszyklus ein Ausgangssignal (IW) der Integratorschaltung (10) auf einen Startwert eingestellt wird und während eines Integrationszyklus der Ausgangswert (IW) der Integratorschaltung (10) mit einem vorgegebenen Referenzwert (RW) verglichen wird und eine Integrationszeit (IZ) ermittelt wird, bis das Ausgangssignal (IW) der Integratorschaltung (10) den Referenzwert (RW) erreicht und die ermittelte Integrationszeit (IZ) für die Steuerung der Beleuchtungseinrichtung (1) genutzt wird.

11. Schaltungsanordnung (4, 4') zur Steuerung einer Beleuchtungseinrichtung (1) in Abhängigkeit von einer Umgebungslichtstärke, **gekennzeichnet durch** eine Messschaltung (7, 9), um mittels zumindest eines zur Beleuchtung dienenden lichtemittierenden Elements (2) der Beleuchtungseinrichtung (1) die Umgebungslichtstärke zu messen.

12. Schaltungsanordnung nach Anspruch 11, **dadurch gekennzeichnet, dass** das lichtemittierende Element (2) eine LED (2) und/oder eine OLED umfasst.

13. Schaltungsanordnung nach Anspruch 11 oder 12, **gekennzeichnet durch** eine Umschaltvorrichtung (3), welche das lichtemittierenden Element (2) wechselweise entweder mit einer Spannungsquelle (8) oder mit der Messschaltung (7, 9) zur Ermittlung der Umgebungslichtstärke verbindet.

14. Schaltungsanordnung nach Anspruch 13, **dadurch gekennzeichnet, dass** die Umschaltvorrichtung (3) eine erste Schalteinheit (T1), welche zwischen dem lichtemittierenden Element (2) und der Spannungsquelle (8) angeordnet ist, und eine zweite Schalteinheit (T2) umfasst, welche zwischen dem lichtemittierenden Element (2) und der Messschaltung (7, 9) angeordnet ist, wobei die Schalteinheiten (T1, T2) antiparallel geschaltet sind.

15. Schaltungsanordnung nach Anspruch 13 oder 14, **gekennzeichnet durch** eine Pulsweitenmodulations-Steuereinheit (5), welche ausgangsseitig mit der Umschaltvorrichtung (3) verbunden ist und diese umschaltet.

16. Schaltungsanordnung nach einem der Ansprüche 11 bis 15, **dadurch gekennzeichnet, dass** die Schaltungsanordnung (3) so ausgestaltet und/oder angeordnet ist, dass beim Messen mehrere parallel und/oder in Serie geschaltete lichtemittierende Elemente (2) der Beleuchtungseinrichtung (1) mit der Messschaltung (7, 9) verbunden sind.

17. Schaltungsanordnung nach einem der Ansprüche 11 bis 16, **dadurch gekennzeichnet, dass** die Messschaltung (7) einen Analog/Digital-Wandler (6) zur Digitalisierung eines Ausgangssignals (LS) des lichtemittierenden Elements (2) aufweist, welcher ausgangsseitig mit einer Pulsweitenmodulations-Steuereinheit (5) und/oder mit einer zentralen Steuereinrichtung verbunden ist.

18. Schaltungsanordnung nach einem der Ansprüche 11 bis 16, **dadurch gekennzeichnet, dass** die Messschaltung (9) eine Integratorschaltung (10) aufweist, welche Ausgangssignale (LS) des lichtemittierenden Elements (2) innerhalb eines mehrere einzelne Messungen umfassenden Integrationszyklus aufintegriert.

19. Schaltungsanordnung nach Anspruch 18, **gekennzeichnet durch**,
- Mittel, um zu Beginn eines Integrationszyklus ein Ausgangssignal (IW) der Integratorschaltung (10) auf einen Startwert einzustellen,
- einen Vergleicher (11), der während eines Integrationszyklus das Ausgangssignal (IW) der Integratorschaltung (10) mit einem vorgegebenen Referenzwert (RW) vergleicht
- und Zeiterfassungsmittel (12), um eine Integrationszeit (IZ) zu messen, bis das Ausgangssignal (IW) der Integratorschaltung (10) den Referenzwert (RW) erreicht.

20. Schaltungsanordnung nach einem der Ansprüche 11 bis 19, **dadurch gekennzeichnet, dass** die Schaltungsanordnung (4, 4') in einen integrierten Schaltkreis einer Spannungsversorgungssteuerung der Beleuchtungseinrichtung 1 integriert ist.

21. Beleuchtungssystem mit einer Beleuchtungseinrichtung und mit einer Schaltungsanordnung nach einem der Ansprüche 11 bis 20.

22. Benutzerschnittstelle mit einem Beleuchtungssystem nach Anspruch 21.

23. Gerät mit einer Benutzerschnittstelle nach Anspruch 22.
